# EUROPEAN PATENT APPLICATION

(11) **EP 4 432 792 A1**
(43) Date of publication of application: **18.09.2024**
(21) Application number: 22892005.4
(22) Date of filing: 09.11.2022
(51) Int. Cl.: H05K 5/02, G02B 6/00, G09F 9/30

(54) **ELECTRONIC PRICE TAG HAVING INTEGRATED LIGHT GUIDE STRUCTURE**

(30) Priority: 09.11.2021 CN 202122726728 U
(71) Applicant: Hanshow Technology Co., Ltd., Jiaxing, Zhejiang 314031 (CN)
(72) Inventor: ZHANG, Xiaofei, Jiaxing, Zhejiang 314031 (CN); WANG, Linjiang, Jiaxing, Zhejiang 314031 (CN); ZHANG, Su, Jiaxing, Zhejiang 314031 (CN); ZHAO, Jianguo, Jiaxing, Zhejiang 314031 (CN); HOU, Shiguo, Jiaxing, Zhejiang 314031 (CN)
(74) Representative: Patentanwälte Olbricht Buchhold Keulertz
(86) International application number: PCT/CN2022/130851
(87) International publication number: WO 2023/083211

(57) **Abstract**

The present disclosure provides an electronic shelf label with an integrated light guiding structure, including: a screen (6), a light guiding sleeve (7) and an indicator light (4). The light guiding sleeve (7) is disposed to sleeve the screen (6) along an edge thereof. A rear end face of the light guiding sleeve (7) is attached to the indicator light (4). A light guiding post (701) is formed at a position, which is on a front end face of the light guiding sleeve (7) and overlapped with the indicator light (4). The present disclosure solves the technical problems of complicated internal structure and high cost of the electronic shelf label.

## Description

### RELATED APPLICATION

The present disclosure claims priority to Chinese Invention Patent Application No. 202122726728.0, filed November 9, 2021, and entitled 'electronic shelf label with integrated light guiding structure'.

### TECHNICAL FIELD

The present disclosure relates to the field of electronic products, and portionicularly to an electronic shelf label with an integrated light guiding structure.

### BACKGROUND

At present, it is necessary to dispose an indicator light on an electronic shelf label to indicate different sales states of commodities (e.g., promotion, low inventory, etc.). The light guiding mode of the electronic shelf label usually uses a lens or a light guiding post for light guidance. In the light guiding mode using a lens, a light hole on a transparent lens is generally not shielded, so that light emitted by exposed LED beads is transmitted to the lens to achieve light guiding. In the light guiding mode using a light guiding post, a transparent light guiding post is generally fixed on a main shell (non-transparent) by hot melting or buckling, and a bottom surface of the light guiding post is in contact with the LED beads, so that light is transmitted through the light guiding post itself to achieve light guiding.

However, the above two light guiding modes have their respective disadvantages.

The light guiding mode using a lens is mainly suitable for an electronic shelf label with a transparent front cover, in which both a screen display area and a light hole area are not shielded, while a front cover made of a non-transparent material cannot meet the requirement of this light guiding mode. In addition, if the front cover is made of a transparent material, the light is easy to scatter, and there will be halos or uneven brightnesses in a dark environment, which affects the displaying of product information on the electronic shelf label and brings about poor usage experiences.

The light guiding mode using a light guiding post is mainly suitable for an electronic shelf label with a non-transparent front cover, in which an area on the front cover opposite to the LED beams needs hole digging, and then the light guiding post and the shell are assembled and fixed, which is not only complicated in structure, but also high in production cost and poor in applicability.

Regarding the problems of the complicated internal structure and the high cost of the electronic shelf label in the related art, there is no effective solution at present.

### SUMMARY

The present disclosure aims to provide an electronic shelf label with an integrated light guiding structure, in which a light guiding sleeve is not only disposed to replace a separately mounted light guiding post, and but also play a dual role in protecting the screen and light-guiding, thereby simplifying the internal structure of the electronic shelf label, effectively reducing the assembly difficulty of the whole product, increasing the production efficiency of the electronic shelf label, and reducing the production cost.

The above objective of the present disclosure can be achieved by adopting the following technical solution.

The present disclosure provides an electronic shelf label with an integrated light guiding structure, including: a screen, a light guiding sleeve and an indicator light. The light guiding sleeve is disposed to sleeve the screen along an edge thereof, a rear end face of the light guiding sleeve is attached to the indicator light, and a light guiding post is formed at a position, which is on a front end face of the light guiding sleeve and overlapped with the indicator light.

The present disclosure has the following advantageous effects:

In the electronic shelf label with an integrated light guiding structure, a light guiding sleeve is disposed along the edge of the screen to play a dual role in light-guiding and protecting the screen, thereby preventing corners of the screen from being damaged due to bumping, and prolonging the service life of the electronic shelf label.

In the electronic shelf label with an integrated light guiding structure, a light guiding post is formed on the light guiding sleeve at a position overlapped with the indicator light, so it is unnecessary to mount a light guiding post separately, which reduces the material consumption of the light guiding post and eliminates one assembly procedure, thereby simplifying the internal structure of the electronic shelf label, reducing the assembly difficulty of the whole product, effectively improving the production efficiency of the electronic shelf label and reducing the production cost, so that the electronic shelf label is suitable for popularization and use.

### BRIEF DESCRIPTION OF DRAWINGS

The following drawings are only intended to schematically illustrate and explain the present disclosure, rather than limiting the scope thereof. In the drawings,
FIG. 1 illustrates a structural diagram of an electronic shelf label with an integrated light guiding structure according to the present disclosure in a exploded state.
FIG. 2 illustrates a schematic diagram of a mounting position of a front cover in an electronic shelf label with an integrated light guiding structure according to the present disclosure.

### DETAILED DESCRIPTION OF EMBODIMENTS

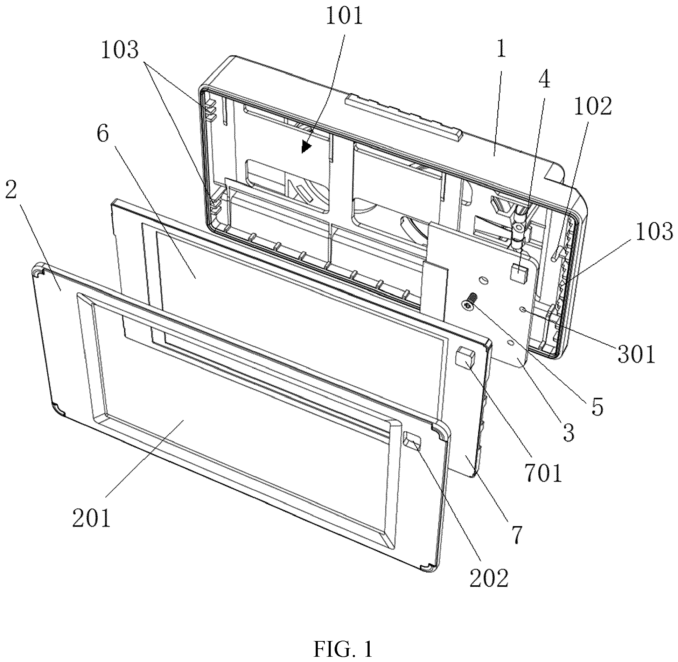

For a clearer understanding of the technical features, objectives and effects of the present disclosure, specific embodiments of the present disclosure will now be described with reference to the drawings. Unless the indicated directions defined separately, any direction such as upward, downward, forward and backward mentioned herein are all based on those illustrated in FIG. 1 of the present disclosure, which are explained here together.

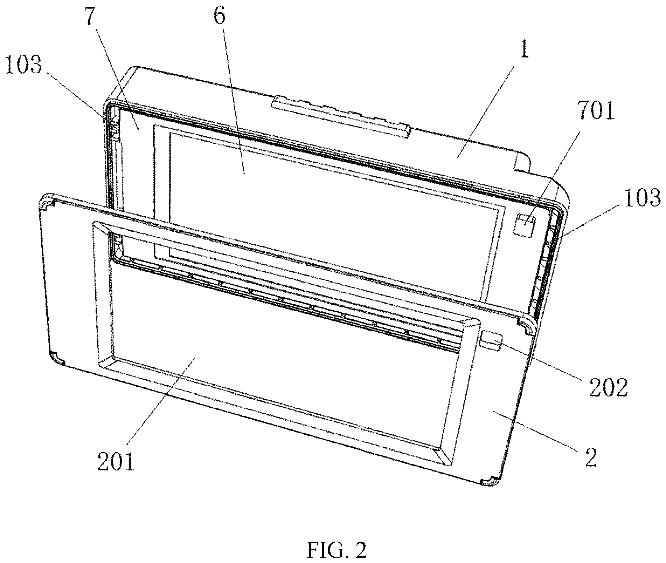

As illustrated in FIGS. 1 and 2, the present disclosure provides an electronic shelf label with an integrated light guiding structure, including a screen 6, a light guiding sleeve 7 and an indicator light 4. The light guiding sleeve 7 is light transmissive, and is disposed to sleeve the screen 6 along an edge thereof. A rear end face of the light guiding sleeve 7 is attached to the indicator light 4. A light guiding post 701 is formed at a position, which is on a front end face of the light guiding sleeve 7 and overlapped with the indicator light 4, i.e., the light guiding sleeve 7 is a columnar protrusion formed on the light guiding sleeve 7 and integrally formed therewith. By disposing the light guiding post 701, it is possible to guide light emitted from the indicator light 4. Since the light guiding post 701 is integrally formed with the light guiding sleeve 7, it is unnecessary to mount the light guiding post 701 separately, which reduces the number of internal structural portions of the electronic shelf label, thereby simplifying the internal structure and the circuit layout of the electronic shelf label, reducing the assembly difficulty of the whole product, effectively improving the production efficiency of the electronic shelf label and reducing the production cost. In addition, since being disposed to sleeve the screen 6, the light guiding sleeve 7 can achieve the dual-effects of light guidance and screen protection, thereby preventing corners of the screen from being damaged due to bumping, and prolonging the service life of the electronic shelf label.

In an alternative embodiment of the present disclosure, as illustrated in FIGS. 1 and 2, the electronic shelf label with an integrated light guiding structure further includes a rear shell 1, which is a plate-shaped structure disposed in a vertical direction. An accommodating groove 101 is formed on a front portion of the rear shell 1, and both the screen 6 and the indicator light 4 are located in the accommodating groove 101. The front portion of the rear shell 1 is provided with a front cover 2, which is fixedly connected to the front portion of the rear shell 1 and blocks an opening of the accommodating groove 101. The front cover 2 is a plate-shaped structure disposed in the vertical direction. By disposing the front cover 2, it ensures that the screen 6 and the indicator light 4 are firmly disposed in the accommodating groove 101. In addition, the front cover 2 is provided with a light-transmitting hole 202 at a position overlapped with the light guiding post 701, so that the light guiding post 701 can extend into the light-transmitting hole 202, for the convenience of light emergence.

Further, the light guiding sleeve 7 is made of a material that is transparent, partially-transparent (i.e., an area where the light guiding post 701 is located is transparent) or translucent, so as to ensure that the position on the light guiding sleeve 7 overlapped with the indicator light 4 is light transmissive. Exemplarily, the light guiding sleeve 7 is made of silica gel with light conductivity.

Further, an edge of the front cover 2 may be fixed with the rear shell 1 by, but not limited to, ultrasonic welding.

Further, as illustrated in FIGS. 1 and 2, a display window 201 is opened on the front cover 2 at a position overlapped with the screen 6, so that commodity information displayed on the screen 6 can be displayed to the outside through the display window 201.

In an alternative embodiment of the present disclosure, as illustrated in FIG. 1, the electronic shelf label with an integrated light guiding structure further includes a control panel 3 to which the indicator light 4 is connected, and a control signal output end of the control panel 3 is connected to a control end of the screen 6 through a flexible printed circuit (FPC), so that the commodity information displayed on the screen 6 can be controlled by the control panel 3.

Specifically, as illustrated in FIG. 1, the control panel 3 is interposed between the screen 6 and an inner wall of the accommodating groove 101, the control panel 3 is closely attached to a rear end face of the screen 6, and the control panel 3 is connected to the inner wall of the accommodating groove 101 by a screw 5, so as to ensure the stable connection of the control panel 3.

Further, as illustrated in FIG. 1, the inner wall of the accommodating groove 101 is provided with a plurality of positioning posts 102, the control panel 3 is provided with a plurality of positioning holes 301 matched with the positioning posts 102, and each of the positioning posts 102 is inserted into a corresponding positioning hole 301, so that the control panel 3 can be positioned in the accommodating groove 101 through the positioning posts 102 and the positioning holes 301, thereby further improving the stability of the control panel 3.

In an alternative embodiment of the present disclosure, as illustrated in FIGS. 1 and 2, a plurality of reinforcing ribs 103 are provided on the inner wall of the accommodating groove 101 and are disposed along an edge of the inner wall, and the plurality of reinforcing ribs 103 are abutted against an edge of the light guiding sleeve 7, so that the screen 6 and the light guiding sleeve 7 can be positioned in the accommodating groove 101 through the reinforcing ribs 103, and the stability of the screen 6 can be improved.

Those described above are only illustrative embodiments of the present disclosure, rather than limiting the scope thereof. Any equivalent change or modification made by persons skilled in the art without departing from the concept and principle of the present disclosure should fall within the protection scope of the present disclosure.

## Claims

1. An electronic shelf label with an integrated light guiding structure, comprising: a screen, a light guiding sleeve and an indicator light, wherein the light guiding sleeve is disposed to sleeve the screen along an edge thereof, a rear end face of the light guiding sleeve is attached to the indicator light, and a light guiding post is formed at a position, which is on a front end face of the light guiding sleeve and overlapped with the indicator light.

2. The electronic shelf label with an integrated light guiding structure according to claim 1, further comprising a rear shell, an accommodating groove is formed on a front portion of the rear shell, both the screen and the indicator light are located in the accommodating groove, the front portion of the rear shell is provided with a front cover which blocks an opening of the accommodating groove, and a light-transmitting hole is provided at a position, which is on the front cover and overlapped with the light guiding post.

3. The electronic shelf label with an integrated light guiding structure according to claim 2, wherein a display window is opened on the front cover at a position overlapped with the screen.

4. The electronic shelf label with an integrated light guiding structure according to claim 2, further comprising a control panel to which the indicator light is connected, and a control signal output end of the control panel is connected to a control end of the screen.

5. The electronic shelf label with an integrated light guiding structure according to claim 4, wherein the control panel is interposed between the screen and an inner wall of the accommodating groove, and the control panel is connected to the inner wall of the accommodating groove by a screw.

6. The electronic shelf label with an integrated light guiding structure according to claim 5, wherein the inner wall of the accommodating groove is provided with a positioning post, the control panel is provided with a positioning hole matched with the positioning post, and the positioning post is inserted into the positioning hole.

7. The electronic shelf label with an integrated light guiding structure according to claim 2, wherein a plurality of reinforcing ribs are provided on an inner wall of the accommodating groove and are disposed along an edge of the inner wall, and the plurality of reinforcing ribs are abutted against an edge of the light guiding sleeve.

8. The electronic shelf label with an integrated light guiding structure according to claim 2, wherein an edge of the front cover is fixed with the rear shell by ultrasonic welding.

9. The electronic shelf label with an integrated light guiding structure according to claim 1, wherein the light guiding sleeve is made of a material that is transparent, partially transparent or translucent.

10. The electronic shelf label with an integrated light guiding structure according to claim 9, wherein the light guiding sleeve is made of silica gel with light conductivity.
